# EUROPEAN PATENT APPLICATION

(11) **EP 4 632 853 A1**
(43) Date of publication of application: **15.10.2025**
(21) Application number: 23900276.9
(22) Date of filing: 14.09.2023
(51) Int. Cl.: H01M 8/04858, H01M 8/04, H01M 8/04537, H02J 3/00

(54) **POWER GENERATION PLAN REVISION METHOD, POWER GENERATION PLAN REVISION DEVICE, AND POWER GENERATION SYSTEM**

(30) Priority: 08.12.2022 JP 2022196392
(71) Applicant: Panasonic Intellectual Property Management Co., Ltd., Kadoma-shi, Osaka 571-0057 (JP)
(72) Inventor: TANAKA, Yoshikazu, Kadoma-shi, Osaka 571-0057 (JP); ISE, Takehiko, Kadoma-shi, Osaka 571-0057 (JP); YOSHIHARA, Yasumichi, Kadoma-shi, Osaka 571-0057 (JP); KANEKO, Yasushi, Kadoma-shi, Osaka 571-0057 (JP); TAGUCHI, Yoshifumi, Kadoma-shi, Osaka 571-0057 (JP)
(74) Representative: Grünecker Patent- und Rechtsanwälte PartG mbB
(86) International application number: PCT/JP2023/033617
(87) International publication number: WO 2024/122150

(57) **Abstract**

A power generation plan revision method according to the present disclosure includes: receiving a power generation plan for a fuel cell device provided with a plurality of fuel cell power generation units; and revising the received power generation plan for the fuel cell device so as to advance a timing of changing the power-generating number of the fuel cell power generation units relative to a timing of changing from a previous unit period to a next unit period in the power generation plan, according to the magnitude of a change in the output of the fuel cell device when changing from the previous unit period to the next unit period.

## Description

### Technical Field

The present disclosure relates to a power generation plan revision method, a power generation plan revision device, and a power generation system.

### Background Art

Various proposals have been made heretofore regarding output control of power generation systems. As an example, PTL 1 discloses a power generation system provided with: a first generator, a second generator with higher output stability than the first generator, and a controller that controls the output of the first generator and the output of the second generator, wherein the controller divides a unit time into a plurality of control periods, and sets a power generation amount corresponding to the difference between a planned power generation amount and an actual power generation amount of the first generator in one control period as the amount by which to increase or decrease the power generation amount of the second generator in the next control period. PTL 1 also discloses a power generation system in which the controller carries out control to shorten a certain control period as the predicted change in the power generation amount of the first generator decreases and lengthen the certain control period as the predicted change in the power generation amount of the first generator increases, and in addition, shorten the length of the next control period after the certain control period to less than the length of the certain control period when the remaining time in the unit time becomes equal or less than a prescribed threshold value.

### Citation List

### Patent Literature

PTL 1: Japanese Patent No. 6680711

### Summary of Invention

### Technical Problem

As an example, the objective of the present disclosure is to provide a power generation plan revision method, a power generation plan revision device, and a power generation system that may reduce, more than in the past, planning error in a power generation plan for a fuel cell device provided with a plurality of fuel cell power generation units.

### Solution to Problem

To achieve the above objective, a power generation plan revision method according to an aspect of present disclosure includes: receiving a power generation plan for a fuel cell device provided with a plurality of fuel cell power generation units; and revising the received power generation plan for the fuel cell device so as to advance a timing of changing the power-generating number of the fuel cell power generation units relative to a timing of changing from a previous unit period to a next unit period in the power generation plan, according to the magnitude of a change in the output of the fuel cell device when changing from the previous unit period to the next unit period.

A power generation plan revision device according to an aspect of the present disclosure includes: a communicator that receives a power generation plan for a fuel cell device provided with a plurality of fuel cell power generation units; and a controller that revises the received power generation plan for the fuel cell device so as to advance a timing of changing the power-generating number of the fuel cell power generation units relative to a timing of changing from a previous unit period to a next unit period in the power generation plan, according to the magnitude of a change in the output of the fuel cell device when changing from the previous unit period to the next unit period.

A power generation system according to an aspect of the present disclosure includes: a fuel cell device provided with a plurality of fuel cell power generation units; and the above power generation plan revision device.

### Advantageous Effects of Invention

The power generation plan revision method, power generation plan revision device, and power generation system according to aspects of the present disclosure exhibit the effect whereby planning error in a power generation plan for a fuel cell device provided with a plurality of fuel cell power generation units may be reduced more than in the past. Brief Description of Drawings

[Fig. 1] Fig. 1 is a diagram for explaining an example of operations (a power generation plan revision method) by a power generation plan revision device according to the present disclosure.
[Fig. 2] Fig. 2 is a diagram illustrating an example of a power generation system according to a first embodiment.
[Fig. 3] Fig. 3 is a flowchart illustrating an example of operations (a power generation plan revision method) by a power generation plan revision device in a power generation system according to the first embodiment.
[Fig. 4] Fig. 4 is a flowchart illustrating an example of operations (a power generation plan revision method) by a power generation plan revision device in a power generation system according to a first implementation example of the first embodiment.
[Fig. 5] Fig. 5 is a flowchart illustrating an example of operations (a power generation plan revision method) by a power generation plan revision device in a power generation system according to a second implementation example of the first embodiment.
[Fig. 6] Fig. 6 is a flowchart illustrating an example of operations (a power generation plan revision method) by a power generation plan revision device in a power generation system according to a third implementation example of the first embodiment.
[Fig. 7A] Fig. 7A is a flowchart illustrating an example of operations (a power generation plan revision method) by a power generation plan revision device in a power generation system according to a first modification example of the first embodiment.
[Fig. 7B] Fig. 7B is a diagram for explaining an example of operations in steps S4A and S5 of Fig. 7A.
[Fig. 8A] Fig. 8A is a flowchart illustrating an example of operations (a power generation plan revision method) by a power generation plan revision device in a power generation system according to a second modification example of the first embodiment.
[Fig. 8B] Fig. 8B is a diagram for explaining an example of operations in steps S4B and S5 of Fig. 8A.
[Fig. 9] Fig. 9 is a diagram illustrating an example of a power generation system according to a second embodiment.

### Description of Embodiments

In PTL 1, there is no examination of the problem that occurs when the power generation output changes from a certain control period to the next control period in the control of a power generation system provided with a plurality of generators. Accordingly, if the actual output change of the power generation system is delayed relative to the power generation output change, there is a possibility that planning error will occur in the power generation plan.

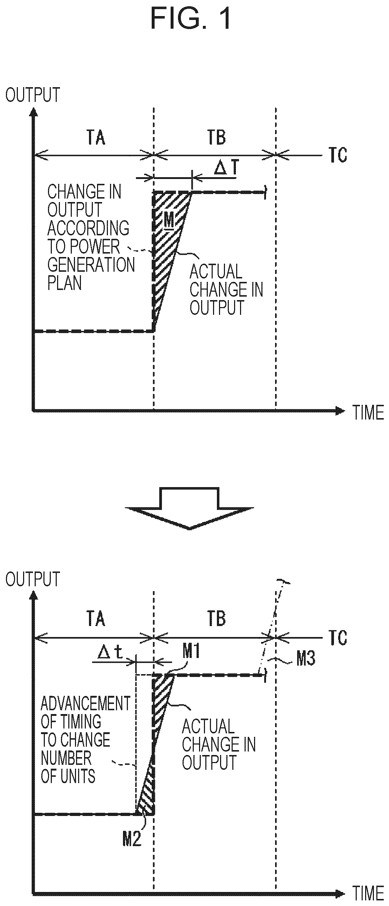

For example, if the actual output change of a fuel cell device provided with a plurality of fuel cell power generation units, as indicated by the thin solid line in the upper part of Fig. 1, is delayed relative to the output change according to the power generation plan when changing from the previous unit period TA to the next unit period TB in the power generation plan, as indicated by the thick dashed line in the upper part of Fig. 1, then planning error (hereinafter, the power generation amount corresponding to the area M) will occur between the power generation amount of the power generation plan in the next unit period TB and the power generation amount produced by the actual output of the fuel cell device in the same unit period TB.

Accordingly, a power generation plan revision method according to a first aspect of the present disclosure includes: receiving a power generation plan for a fuel cell device provided with a plurality of fuel cell power generation units; and revising the received power generation plan for the fuel cell device so as to advance a timing of changing the power-generating number of the fuel cell power generation units relative to a timing of changing from a previous unit period to a next unit period in the power generation plan, according to the magnitude of a change in the output of the fuel cell device when changing from the previous unit period to the next unit period.

According to the above, the power generation plan revision method according to the present aspect may reduce, more than in the past, planning error in a power generation plan for a fuel cell device provided with a plurality of fuel cell power generation units.

Specifically, in the power generation plan revision method according to the present aspect, the timing of changing the power-generating number of fuel cell power generation units is advanced relative to the timing of changing from the previous unit period TA to the next unit period TB, according to the magnitude of the change in the output of the fuel cell device provided with a plurality of fuel cell power generation units when changing from the previous unit period TA to the next unit period TB, as illustrated in the lower part of Fig. 1. This causes the planning error in the power generation plan to be distributed across the previous unit period TA and the next unit period TB, leveling the planning error in the power generation plan as a result.

Also, the power generation plan revision method according to the present aspect can reduce the relative amount of planning error in the power generation amount in the power generation plan. To describe using the example in the lower part of Fig. 1, the magnitude Δt of the time by which to advance the timing to change the power-generating number of fuel cell power generation units is set to approximately half the time ΔT by which the actual output change of the fuel cell device is delayed. Therefore, in this case, the planning error (hereinafter, the power generation amount corresponding to the area M1) between the power generation amount of the power generation plan in the next unit period TB and the power generation amount produced by the actual output of the fuel cell device in the same unit period TB is 1/4 the power generation amount corresponding to the area M. Also, the planning error (hereinafter, the power generation amount corresponding to the area M2) between the power generation amount of the power generation plan in the previous unit period TA and the power generation amount produced by the actual output of the fuel cell device in the same unit period TA is 1/4 the power generation amount corresponding to the area M. In other words, the combined total (M1+M2) of the power generation amount corresponding to the area M1 and the power generation amount corresponding to the area M2 is reduced to 1/2 compared to the power generation amount corresponding to the area M.

Furthermore, the power generation plan revision method according to the present aspect can cancel out planning error in the power generation amount in a unit period in cases where the sign is reversed between: the planning error between the power generation amount of the power generation plan and the power generation amount produced by the actual output of the fuel cell device at the beginning of the unit period; and the same planning error at the end of the unit period. To describe using the example in the lower part of Fig. 1, in the case where the timing of changing the power-generating number of fuel cell power generation units is advanced relative to the timing of changing from the unit period TB to the next unit period TC, as indicated by chain double-dashed line in the drawing, the planning error (power generation amount corresponding to the area M3), which is predicted by subtracting the power generation amount produced by the actual output of the fuel cell device from the power generation amount of the power generation plan at the end of the unit period TB, is negative. In contrast, the planning error (power generation amount corresponding to the area M1), which is predicted by subtracting the power generation amount produced by the actual output of the fuel cell device from the power generation amount of the power generation plan at the beginning of the unit period TB, is positive. Thus, the planning error between the power generation amount of the power generation plan at the beginning of the unit period TB and the power generation amount produced by the actual output of the fuel cell device is canceled out by the same planning error at the end of the unit period TB.

In a power generation plan revision method according to a second aspect of the present disclosure, the power generation plan revision method according to the first aspect may revise the power generation plan for the fuel cell device so as to further advance the timing of changing the output of the fuel cell power generation units relative to the timing of changing from the previous unit period to the next unit period in the power generation plan, proportionally with the change in the output of the fuel cell device when changing from the previous unit period to the next unit period in the power generation plan for the fuel cell device.

The greater the change in the output of the fuel cell device when changing from the previous unit period to the next unit period, the longer the time ΔT by which the actual output change of the fuel cell device is delayed. Therefore, by further advancing the timing of changing the power-generating number of fuel cell power generation units relative to the timing of changing from the previous unit period to the next unit period, proportionally with the magnitude of the change in the output of the fuel cell device when changing from the previous unit period to the next unit period, the power generation plan revision method according to the present aspect can reduce the planning error of the power generation plan as compared to the case of not carrying out such output control of the fuel cell device.

**In** a power generation plan revision method according to a third aspect of the present disclosure, the power generation plan revision method according to the first or second aspect may determine a magnitude of time by which to advance the timing of changing the output of the fuel cell power generation units relative to the timing of changing from the previous unit period to the next unit period such that the difference or ratio of the following falls within a prescribed range: a total power generation amount of the power generation plan for the fuel cell device in the previous unit period and the next unit period and a total power generation amount of the fuel cell device in the previous unit period and the next unit period predicted for the case of controlling the fuel cell device on the basis of a revised power generation plan for the fuel cell device.

The greater the difference or the ratio between the total power generation amount of the power generation plan for the fuel cell device in the previous unit period and the next unit period and the total power generation amount of the fuel cell device predicted for the case of controlling the fuel cell device on the basis of a revised power generation plan for the fuel cell device, the greater the planning error in the power generation amount in the power generation plan. Therefore, by determining the magnitude of time by which to advance the timing of changing the power-generating number of fuel cell power generation units relative to the timing of changing from the previous unit period to the next unit period such that the difference or the ratio falls within a prescribed range, the power generation plan revision method according to the present aspect can reduce the planning error in the power generation amount in the power generation plan as compared to the case of not carrying out such output control of the fuel cell device.

A power generation plan revision device according to a fourth aspect of the present disclosure includes: a communicator that receives a power generation plan for a fuel cell device provided with a plurality of fuel cell power generation units; and a controller that revises the received power generation plan for the fuel cell device so as to advance a timing of changing the power-generating number of the fuel cell power generation units relative to a timing of changing from a previous unit period to a next unit period in the power generation plan, according to the magnitude of a change in the output of the fuel cell device when changing from the previous unit period to the next unit period.

According to the above, the power generation plan revision device according to the present aspect may reduce, more than in the past, planning error in a power generation plan for a fuel cell device provided with a plurality of fuel cell power generation units. Note that the details of the operations and effects exhibited by the power generation plan revision device according to the present aspect are similar to the operations and effects exhibited by the power generation plan revision method according to the first aspect, and therefore a description is omitted.

A power generation system according to a fifth aspect of the present disclosure includes: a fuel cell device provided with a plurality of fuel cell power generation units; and the power generation plan revision device according to the fourth aspect.

According to the above, the power generation system according to the present aspect may reduce, more than in the past, planning error in a power generation plan for a fuel cell device provided with a plurality of fuel cell power generation units. Note that the details of the operations and effects exhibited by the power generation system according to the present aspect are similar to the operations and effects exhibited by the power generation plan revision method according to the first aspect, and therefore a description is omitted.

The following describes specific examples of the above aspects of the present disclosure, with reference to the attached drawings. The specific examples described below all illustrate examples of the above aspects of the present disclosure. It follows that the shapes, numerical values, structural elements, layout positions and connection states of structural elements, and the like indicated below do not limit the scope of the claims, unless stated otherwise in the claims.

Moreover, among the structural elements described below, structural elements that are not described in the independent claim indicating the broadest concept of the present disclosure are described as optional structural elements. Also, in the drawings, a description may be omitted in some cases for portions denoted with the same signs. The drawings are schematic illustrations of each of the structural elements to facilitate understanding, and may not be exact representations in terms of shape, dimensional ratio, and the like.

Furthermore, in the device operations, processes may be reordered and known processes may be added, as necessary.

### (First embodiment)

### [Device configuration]

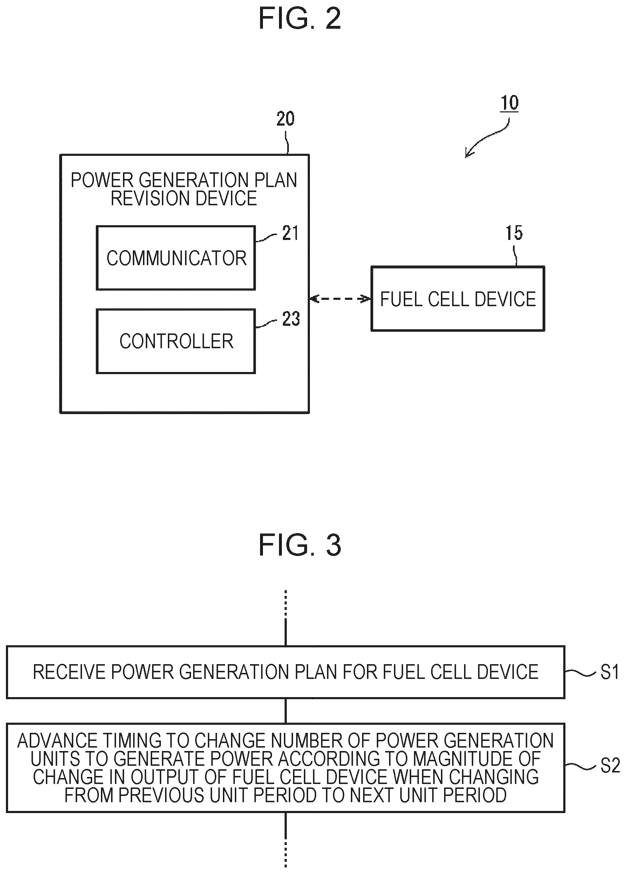

Fig. 2 is a diagram illustrating an example of a power generation system according to a first embodiment.

As illustrated in Fig. 2, the power generation system 10 according to the present embodiment is provided with a fuel cell device 15 and a power generation plan revision device 20. The fuel cell device 15 may be provided with a plurality of power generation units. The power generation system 10 may be a system that supplies bulk power to an electric power system, for example. In this case, the power generation system 10 is provided with a power generation unit cluster containing a plurality of fuel cell power generation units including fuel cell stacks, and the fuel cell device 15 corresponds to each group into which the power generation unit cluster is divided. A detailed configuration of such a power generation system 10 is described in the second embodiment.

Also, the output of the fuel cell device 15 may be adjusted by adjusting the number of power generation units that are to generate power. In this case, the output of each power generation unit can be kept constant at a rated output, which is advantageous for the power generation efficiency and longevity of the power generation units as compared to the case of adjusting the output of each power generation unit that is generating power.

In the example illustrated in Fig. 2, the power generation plan revision device 20 is provided with a communicator 21 and a controller 23.

The communicator 21 is a receiver that receives a power generation plan for the fuel cell device 15. For example, the communicator 21 may receive, for each unit period, the power generation plan transmitted from a terminal or server via a communication network.

The "unit period" may be about 30 minutes, for example, but is not limited thereto. The "unit period" can be set to an appropriate period on the basis of the configuration of the power generation system 10 and the like.

Note that a user of the terminal or server includes a direct or indirect user of the power generation plan revision device 20. A direct user of the power generation plan revision device 20 is an administrator of the power generation plan revision device 20, for example. An indirect user of the power generation plan revision device 20 may be the owning entity or the like of the power generation system 10, for example. Such an owning entity may be a consumer receiving a service of supplying electric power generated by the power generation system 10, or a power producer using the power generation system 10 to supply electric power to consumers.

The controller 23 revises the power generation plan for the fuel cell device 15 received via the communicator 21 so as to advance the timing of changing the number of power generation units that are to generate power relative to the timing of changing from the previous unit period to the next unit period in the power generation plan, according to the magnitude of the change in the output of the fuel cell device 15 when changing from the previous unit period to the next unit period. Note that the "magnitude of the change in the output" may be either the magnitude of the absolute value of the change in the output or the magnitude of the ratio of the change in the output.

The controller 23 may be anything with a control function, and is provided with a computational processor (not illustrated) and storage (not illustrated) storing a control program. Prescribed control is performed in the controller 23 by having the computational processor read out and execute the control program stored in the storage. One example of the computational processor is a microprocessor. One example of the storage is a memory. Note that the controller 23 may directly control operations, including the output of the power generation units in the fuel cell device 15. Also, in the case where the power generation units are each provided with a control device, not illustrated, to control operations, including output, within the power generation units, the controller 23 may indirectly control operations, including the output of the power generation units in the fuel cell device 15.

### [Operations]

Fig. 3 is a flowchart illustrating an example of operations (a power generation plan revision method) by a power generation plan revision device in a power generation system according to the first embodiment. The following operations may be performed by, for example, having the computational processor of the controller 23 read out the control program from the storage of the controller 23. However, the following operations are not necessarily required to be performed by the controller 23. An operator may also perform some of the operations. The following example describes a case in which operations are controlled by the controller 23.

First, when the operations by the power generation plan revision device 20 start, in step S1, a power generation plan for the fuel cell device 15 is received via the communicator 21. For example, the power generation plan transmitted from a terminal or server via a communication network may be received for each unit period.

Next, in step S2, a process is performed to revise the power generation plan for the fuel cell device 15 so as to advance the timing of changing the number of power generation units that are to generate power relative to the timing of changing from the previous unit period to the next unit period, according to the magnitude of the change in the output of the fuel cell device 15 when changing from the previous unit period to the next unit period.

In the process of S2, the magnitude of time by which to advance the timing of changing the number of power generation units that are to generate power relative to the timing of changing from the previous unit period to the next unit period may be determined on the basis of the variation in the output of the fuel cell device 15 when changing from the previous unit period to the next unit period.

Note that, although omitted from illustration in the drawings, in the case where the power generation plan for the fuel cell device 15 is received over a "predetermined period" in step S1, the process of step S2 may be executed for some or all of the timings of changing from a "previous unit period" to a "next unit period" included in the "predetermined period". For example, if the "predetermined period" is 3 days and the "unit period" is 30 minutes, the process of step S2 may be executed for some or all of the timings of changing from a "previous 30 minutes" to a "next 30 minutes" included in 3 days. However, the above "predetermined period" and "unit period" are merely examples, and these periods are not limited to the present example. The "predetermined period" and "unit period" can be set to an appropriate period on the basis of the configuration of the power generation system 10 and the like.

Note that a specific example of the case of executing the above process for some of the timings of changing from a "previous unit period" to a "next unit period" is described in a modification example.

When the above operations by the power generation plan revision device 20 end, power is generated by the fuel cell device 15 at an appropriate time on the basis of the power generation plan.

According to the present embodiment described above, planning error in the power generation plan for the fuel cell device 15 may be reduced more than in the past.

Specifically, according to the present embodiment, the timing of changing the number of power generation units that are to generate power is advanced relative to the timing of changing from the previous unit period TA to the next unit period TB, according to the magnitude of the change in the output of the fuel cell device 15 when changing from the previous unit period TA to the next unit period TB, as illustrated in the lower part of Fig. 1. This causes the planning error in the power generation plan to be distributed across the previous unit period TA and the next unit period TB, leveling the planning error in the power generation plan as a result.

Also, according to the present embodiment, the relative amount of planning error in the power generation amount in the power generation plan can be reduced. In other words, in the example illustrated in the lower part of Fig. 1, the combined total (M1+M2) of the power generation amount corresponding to the area M1 and the power generation amount corresponding to the area M2 is reduced to 1/2 compared to the power generation amount corresponding to the area M.

Furthermore, according to the present embodiment, planning error in the power generation amount in a unit period can be canceled out in cases where the sign is reversed between: the planning error between the power generation amount of the power generation plan and the power generation amount produced by the actual output of the fuel cell device 15 at the beginning of the unit period; and the same planning error at the end of the unit period. To describe using the example in the lower part of Fig. 1, in the case where the timing of changing the number of power generation units that are to generate power is advanced relative to the timing of changing from the unit period TB to the next unit period TC, as indicated by chain double-dashed line in the drawing, the planning error (power generation amount corresponding to the area M3), which is predicted by subtracting the power generation amount produced by the actual output of the fuel cell device 15 from the power generation amount of the power generation plan at the end of the unit period TB, is negative. In contrast, the planning error (power generation amount corresponding to the area M1), which is predicted by subtracting the power generation amount produced by the actual output of the fuel cell device 15 from the power generation amount of the power generation plan at the beginning of the unit period TB, is positive. Thus, the planning error between the power generation amount of the power generation plan at the beginning of the unit period TB and the power generation amount produced by the actual output of the fuel cell device 15 is canceled out by the same planning error at the end of the unit period TB.

### (First implementation example)

The power generation system 10 in a first implementation example of the first embodiment is similar to the power generation system 10 of the first embodiment except for specifics of the control by the controller 23 described below.

The controller 23 revises the power generation plan for the fuel cell device 15 so as to further advance the timing of changing the number of power generation units that are to generate power relative to the timing of changing from the previous unit period to the next unit period, proportionally with the magnitude of the change in the output of the fuel cell device 15 when changing from the previous unit period to the next unit period.

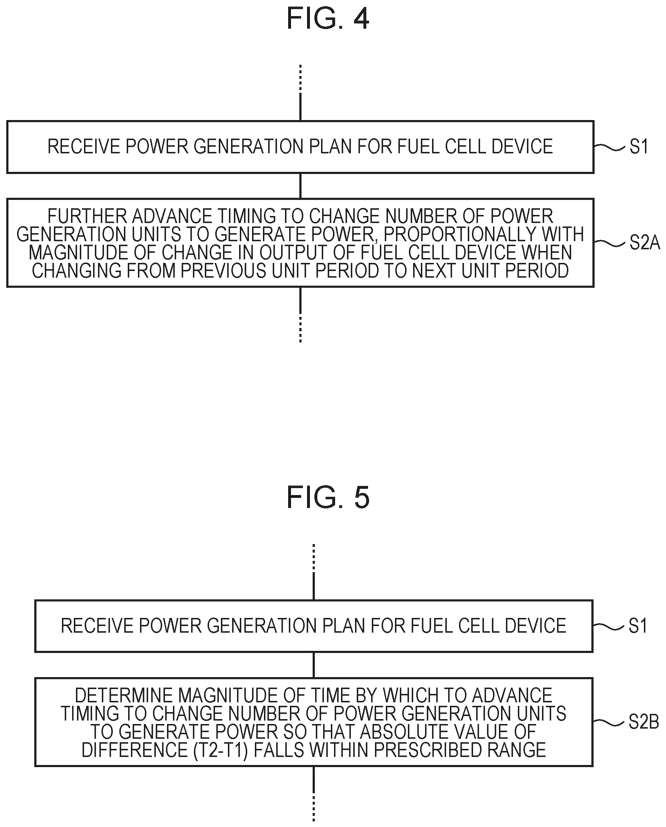

Fig. 4 is a flowchart illustrating an example of operations (a power generation plan revision method) by a power generation plan revision device in a power generation system according to a first implementation example of the first embodiment.

The following operations may be performed by, for example, having the computational processor of the controller 23 read out the control program from the storage of the controller 23. However, the following operations are not necessarily required to be performed by the controller 23. An operator may also perform some of the operations. The following example describes a case in which operations are controlled by the controller 23.

Note that since step S1 of Fig. 4 is similar to step S1 of Fig. 3, a detailed description is omitted. Step S2A of Fig. 4 corresponds to a specific example of the control details of step S2.

In step S2A, a process is performed to revise the power generation plan for the fuel cell device 15 so as to further advance the timing of changing the number of power generation units that are to generate power relative to the timing of changing from the previous unit period to the next unit period, proportionally with the magnitude of the change in the output of the fuel cell device 15 when changing from the previous unit period to the next unit period.

As an example of the process of step S2A, the storage of the controller 23 may store a table defining a correspondence relationship between the variation in the output of the fuel cell device 15 and the magnitude of time by which to advance the timing of changing the number of power generation units that are to generate power. **In** this case, if the variation in the output of the fuel cell device 15 when changing from the previous unit period to the next unit period is computed, the above table can be used to ascertain the magnitude of the above time.

The greater the change in the output of the fuel cell device 15 when changing from the previous unit period to the next unit period, the longer the time ΔT (see Fig. 1) by which the actual output change of the fuel cell device 15 is delayed. Therefore, according to the present embodiment, by further advancing the timing of changing the number of power generation units that are to generate power relative to the timing of changing from the previous unit period to the next unit period, proportionally with the magnitude of the change in the output of the fuel cell device 15 when changing from the previous unit period to the next unit period, the planning error of the power generation plan can be reduced as compared to the case of not carrying out such output control of the fuel cell device 15.

The power generation plan revision method, the power generation plan revision device 20, and the power generation system 10 in the present implementation example may be similar to those of the first embodiment, except for the above feature.

### (Second implementation example)

The power generation system 10 in a second implementation example of the first embodiment is similar to the power generation system 10 of the first embodiment except for specifics of the control by the controller 23 described below.

The controller 23 determines the magnitude of time by which to advance the timing of changing the number of power generation units that are to generate power relative to the timing of changing from the previous unit period to the next unit period such that the following difference falls within a prescribed range: the difference between the total power generation amount of the power generation plan for the fuel cell device 15 in the previous unit period and the next unit period and the total power generation amount of the fuel cell device 15 predicted for the case of controlling the fuel cell device 15 on the basis of a revised power generation plan for the fuel cell device 15.

Fig. 5 is a flowchart illustrating an example of operations (a power generation plan revision method) by a power generation plan revision device in a power generation system according to the second implementation example of the first embodiment.

The following operations may be performed by, for example, having the computational processor of the controller 23 read out the control program from the storage of the controller 23. However, the following operations are not necessarily required to be performed by the controller 23. An operator may also perform some of the operations. The following example describes a case in which operations are controlled by the controller 23.

Note that since step S1 of Fig. 5 is similar to step S1 of Fig. 3, a detailed description is omitted. Step S2B of Fig. 5 corresponds to a specific example of the control details of step S2.

**In** step S2B, a process is performed to determine the magnitude of time by which to advance the timing of changing the number of power generation units that are to generate power relative to the timing of changing from the previous unit period to the next unit period such that the absolute value of the difference (T2-T1) falls within a prescribed range, the difference (T2-T1) being the difference between the total power generation amount (T1) of the power generation plan for the fuel cell device 15 in the previous unit period and the next unit period and the total power generation amount (T2) of the fuel cell device 15 predicted for the case of controlling the fuel cell device 15 on the basis of a revised power generation plan for the fuel cell device 15.

As an example of the process of step S2B, a numerical simulation may be used to successively compute the absolute value of the above difference (T2-T1) while successively varying, by minute amounts of time, the time by which to advance the timing of changing the number of power generation units that are to generate power relative to the timing of changing from the previous unit period to the next unit period, and the magnitude of the above time may be determined such that the absolute value is a minimum value.

The greater the absolute value of the difference (T2-T1), the greater the planning error in the power generation amount in the power generation plan. Therefore, according to the present implementation example, by determining the magnitude of time by which to advance the timing of changing the number of power generation units that are to generate power relative to the timing of changing from the previous unit period to the next unit period such that the absolute value of the difference (T2-T1) falls within a prescribed range, the planning error in the power generation amount in the power generation plan can be reduced as compared to the case of not carrying out such output control of the fuel cell device 15.

The power generation plan revision method, the power generation plan revision device 20, and the power generation system 10 in the present implementation example may be similar to those of the first embodiment or the first implementation example of the first embodiment, except for the above feature.

### (Third implementation example)

The power generation system 10 in a third implementation example of the first embodiment is similar to the power generation system 10 of the first embodiment except for specifics of the control by the controller 23 described below.

The controller 23 determines the magnitude of time by which to advance the timing of changing the number of power generation units that are to generate power relative to the timing of changing from the previous unit period to the next unit period such that the following ratio falls within a prescribed range: the ratio of the total power generation amount of the power generation plan for the fuel cell device 15 in the previous unit period and the next unit period and the total power generation amount of the fuel cell device 15 predicted for the case of controlling the fuel cell device 15 on the basis of a revised power generation plan for the fuel cell device 15.

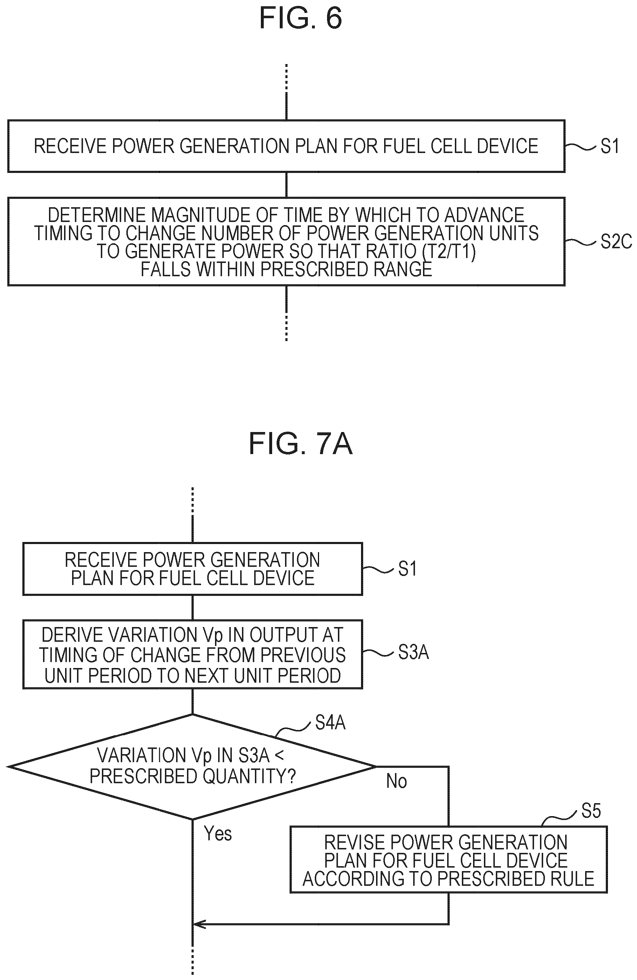

Fig. 6 is a flowchart illustrating an example of operations (a power generation plan revision method) by a power generation plan revision device in a power generation system according to the third implementation example of the first embodiment.

The following operations may be performed by, for example, having the computational processor of the controller 23 read out the control program from the storage of the controller 23. However, the following operations are not necessarily required to be performed by the controller 23. An operator may also perform some of the operations. The following example describes a case in which operations are controlled by the controller 23.

Note that since step S1 of Fig. 6 is similar to step S1 of Fig. 3, a detailed description is omitted. Step S2C of Fig. 6 corresponds to a specific example of the control details of step S2.

**In** step S2C, a process is performed to determine the magnitude of time by which to advance the timing of changing the number of power generation units that are to generate power relative to the timing of changing from the previous unit period to the next unit period such that the ratio (T2/T1) falls within a prescribed range, the ratio (T2/T1) being the difference between the total power generation amount (T1) of the power generation plan for the fuel cell device 15 in the previous unit period and the next unit period and the total power generation amount (T2) of the fuel cell device 15 predicted for the case of controlling the fuel cell device 15 on the basis of a revised power generation plan for the fuel cell device 15.

As an example of the process of step S2C, a numerical simulation may be used to successively compute the above ratio (T2/T1) while successively varying, by minute amounts of time, the time by which to advance the timing of changing the number of power generation units that are to generate power relative to the timing of changing from the previous unit period to the next unit period, and the magnitude of the above time may be determined such that the amount by which the ratio deviates from "1" is a minimum value.

The greater the amount by which the above ratio (T2/T1) deviates from " 1", the greater the planning error in the power generation amount in the power generation plan. Therefore, according to the present implementation example, by determining the magnitude of time by which to advance the timing of changing the number of power generation units that are to generate power relative to the timing of changing from the previous unit period to the next unit period such that the ratio (T2/T1) falls within a prescribed range, the planning error in the power generation amount in the power generation plan can be reduced as compared to the case of not carrying out such output control of the fuel cell device 15.

The power generation plan revision method, the power generation plan revision device 20, and the power generation system 10 in the present implementation example may be similar to those of the first embodiment or the first implementation example of the first embodiment, except for the above feature.

### (First modification example)

The power generation system 10 in a first modification example of the first embodiment is similar to the power generation system 10 of the first embodiment except for specifics of the control by the controller 23 described below.

The controller 23 revises the power generation plan for the fuel cell device 15 so as to advance the timing of changing the number of power generation units that are to generate power relative to the timing of changing from the previous unit period to the next unit period, on the basis of the variation in the output of the fuel cell device 15 when changing from the previous unit period to the next unit period.

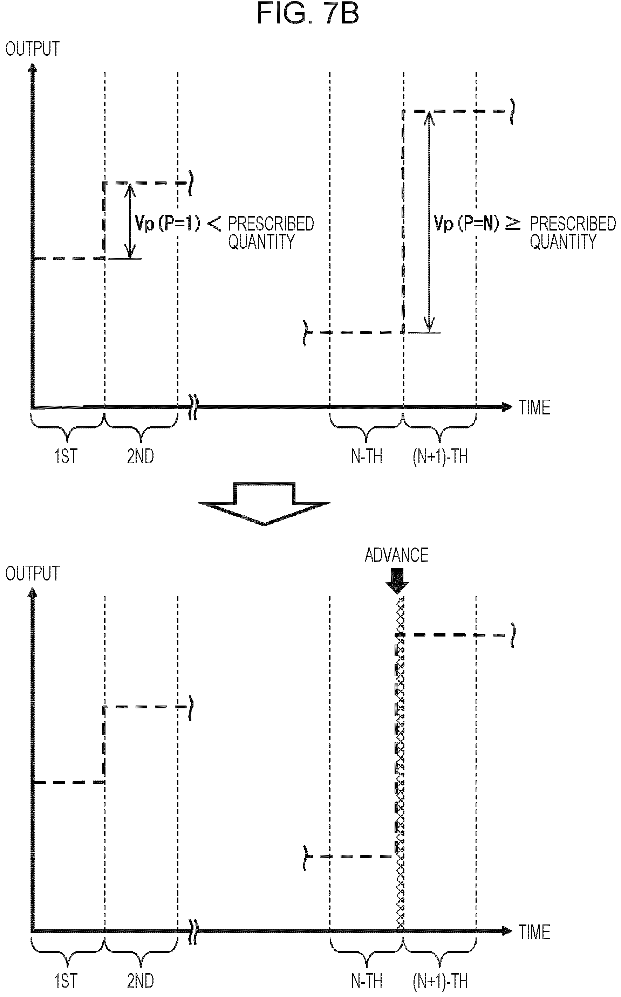

Fig. 7A is a flowchart illustrating an example of operations (a power generation plan revision method) by a power generation plan revision device in a power generation system according to the first modification example of the first embodiment. Fig. 7B is a diagram for explaining an example of operations in steps S4A and S5 of Fig. 7A.

The following operations may be performed by, for example, having the computational processor of the controller 23 read out the control program from the storage of the controller 23. However, the following operations are not necessarily required to be performed by the controller 23. An operator may also perform some of the operations. The following example describes a case in which operations are controlled by the controller 23.

Note that since step S1 of Fig. 7A is similar to step S1 of Fig. 3, a detailed description is omitted.

In step S3A, the variation Vp (where P is a positive integer less than the number of unit periods included in the power generation plan) in the output of the fuel cell device 15 at the timing of changing from the previous unit period to the next unit period in the power generation plan for the fuel cell device 15 is derived.

Next, in step S4A, it is determined whether or not the above variation Vp in step S3A is less than a prescribed quantity.

If the above variation Vp in step S3A is less than the prescribed quantity (the "Yes" case in step S4A), the power generation plan for the fuel cell device 15 is not revised, whereas if the variation Vp is equal to or greater than the prescribed quantity (the "No" case in step S4A), the power generation plan for the fuel cell device 15 is revised according to a prescribed rule.

In the example illustrated in Fig. 7B, in the power generation plan for the fuel cell device 15, the variation Vp (for P=1) in the output of the fuel cell device 15 at the timing of changing from the 1st unit period to the 2nd unit period is less than the prescribed quantity, and the variation Vp (for P=N) in the output of the fuel cell device 15 at the timing of changing from the N-th unit period to the (N+1)-th unit period is equal to or greater than the prescribed quantity. Therefore, as illustrated in Fig. 7B, the power generation plan for the fuel cell device 15 is revised so as to advance the timing of changing the number of power generation units that are to generate power relative to the timing of changing from the N-th unit period to the (N+1)-th unit period. The "prescribed rule" of step S5 may be, for example, the process of step S2A of Fig. 4, the process of step S2B of Fig. 5, or the process of step S2C of Fig. 6.

As an example of the processes of steps S4A and S5, the storage of the controller 23 may store a table defining a correspondence relationship between the variation in the output of the fuel cell device 15 and the magnitude of time by which to advance the timing of changing the number of power generation units that are to generate power. In this case, if the variation Vp in the output of the fuel cell device 15 when changing from the previous unit period to the next unit period is computed, the above table can be used to ascertain the magnitude of the advancement time that corresponds to the variation Vp. In the table, the magnitude of the above time is set to zero in correspondence with the case where the variation Vp in the output of the fuel cell device 15 is less than the prescribed quantity.

The operations and effects exhibited by the power generation plan revision method, the power generation plan revision device 20, and the power generation system 10 in the present modification example are similar to the operations and effects described in any of the first embodiment and the first to third implementation examples of the first embodiment, and therefore a description is omitted.

The power generation plan revision method, the power generation plan revision device 20, and the power generation system 10 in the present modification example may be similar to those of any of the first embodiment and the first to third implementation examples of the first embodiment, except for the above feature.

### (Second modification example)

The power generation system 10 in a second modification example of the first embodiment is similar to the power generation system 10 of the first embodiment except for specifics of the control by the controller 23 described below.

The controller 23 revises the power generation plan for the fuel cell device 15 so as to advance the timing of changing the number of power generation units that are to generate power relative to the timing of changing from the previous unit period to the next unit period, on the basis of the ratio of the variation in the output of the fuel cell device 15 when changing from the previous unit period to the next unit period.

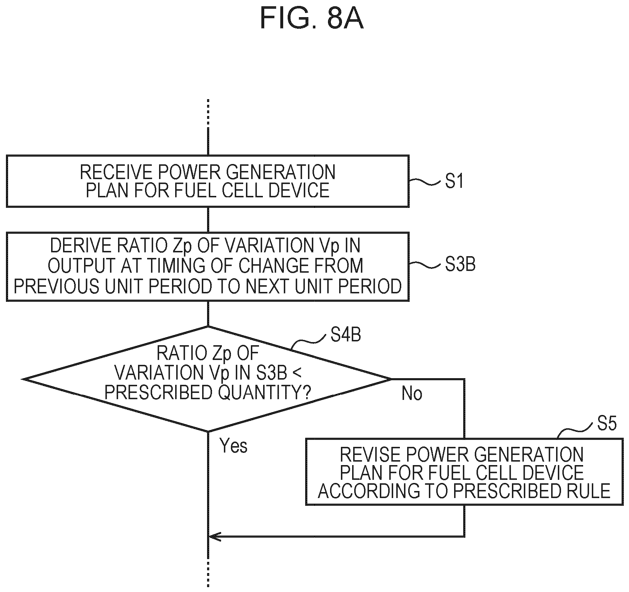

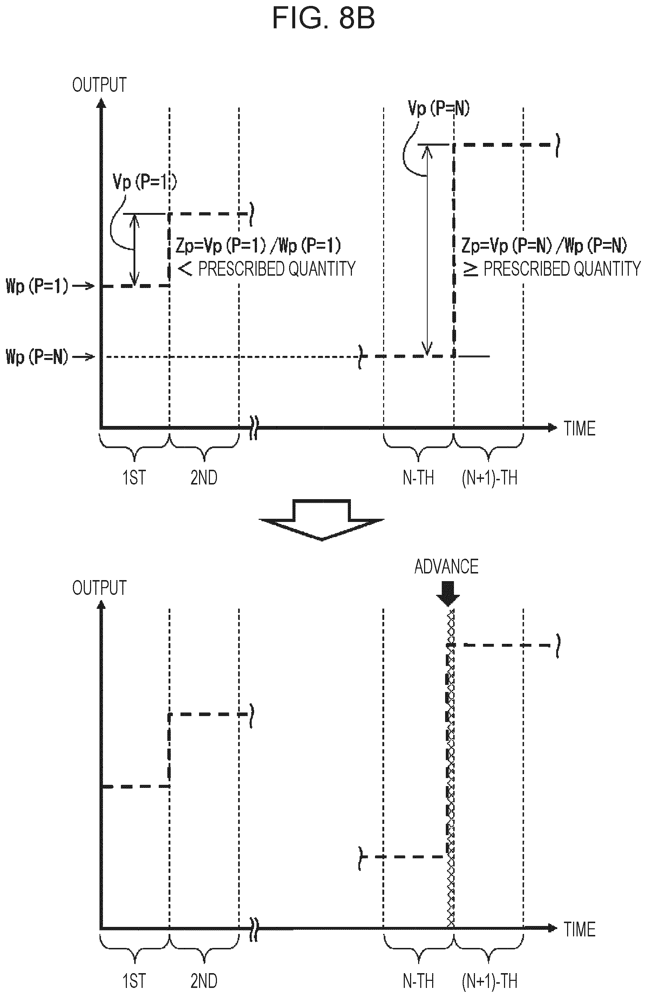

Fig. 8A is a flowchart illustrating an example of operations (a power generation plan revision method) by a power generation plan revision device in a power generation system according to the second modification example of the first embodiment. Fig. 8B is a diagram for explaining an example of operations in steps S4B and S5 of Fig. 8A.

The following operations may be performed by, for example, having the computational processor of the controller 23 read out the control program from the storage of the controller 23. However, the following operations are not necessarily required to be performed by the controller 23. An operator may also perform some of the operations. The following example describes a case in which operations are controlled by the controller 23.

Note that since step S1 of Fig. 8A is similar to step S1 of Fig. 3, a detailed description is omitted.

In step S3B, the ratio Zp of the variation Vp (where P is a positive integer less than the number of unit periods included in the power generation plan) in the output of the fuel cell device 15 at the timing of changing from the previous unit period to the next unit period in the power generation plan for the fuel cell device 15 is derived.

The "ratio Zp of the variation Vp in the output of the fuel cell device 15" refers to the value obtained by dividing the variation Vp in the output of the fuel cell device 15 at the timing of changing from the previous unit period to the next unit period by the output of the fuel cell device 15 before the output change at that timing in the power generation plan for the fuel cell device 15, as illustrated in Fig. 8B.

Next, in step S4B, it is determined whether or not the above ratio Zp in step S3B is less than a prescribed quantity.

If the above ratio Zp in step S3B is less than the prescribed quantity (the "Yes" case in step S4B), the power generation plan for the fuel cell device 15 is not revised, whereas if the ratio Zp is equal to or greater than the prescribed quantity (the "No" case in step S4B), the power generation plan for the fuel cell device 15 is revised according to a prescribed rule.

In the example illustrated in Fig. 8B, in the power generation plan for the fuel cell device 15, the ratio Zp of the variation Vp (for P=1) in the output of the fuel cell device 15 at the timing of changing from the 1st unit period to the 2nd unit period is less than the prescribed quantity, and the ratio Zp of the variation Vp (for P=N) in the output of the fuel cell device 15 at the timing of changing from the N-th unit period to the (N+1)-th unit period is equal to or greater than the prescribed quantity. Therefore, as illustrated in Fig. 8B, the power generation plan for the fuel cell device 15 is revised so as to advance the timing of changing the number of power generation units that are to generate power relative to the timing of changing from the N-th unit period to the (N+1)-th unit period. The "prescribed rule" of step S5 may be, for example, the process of step S2A of Fig. 4, the process of step S2B of Fig. 5, or the process of step S2C of Fig. 6.

As an example of the processes of steps S4B and S5, the storage of the controller 23 may store a table defining a correspondence relationship between the ratio of the variation in the output of the fuel cell device 15 and the magnitude of time by which to advance the timing of changing the number of power generation units that are to generate power. In this case, if the ratio Zp of the variation Vp in the output of the fuel cell device 15 when changing from the previous unit period to the next unit period is computed, the above table can be used to ascertain the magnitude of the advancement time that corresponds to the ratio Zp of the variation Vp. **In** the table, the magnitude of the above time is set to zero in correspondence with the case where the ratio Zp of the variation Vp in the output of the fuel cell device 15 is less than the prescribed quantity.

The operations and effects exhibited by the power generation plan revision method, the power generation plan revision device 20, and the power generation system 10 in the present modification example are similar to the operations and effects described in any of the first embodiment and the first to third implementation examples of the first embodiment, and therefore a description is omitted.

The power generation plan revision method, the power generation plan revision device 20, and the power generation system 10 in the present modification example may be similar to those of any of the first embodiment and the first to third implementation examples of the first embodiment, except for the above feature.

### (Second embodiment)

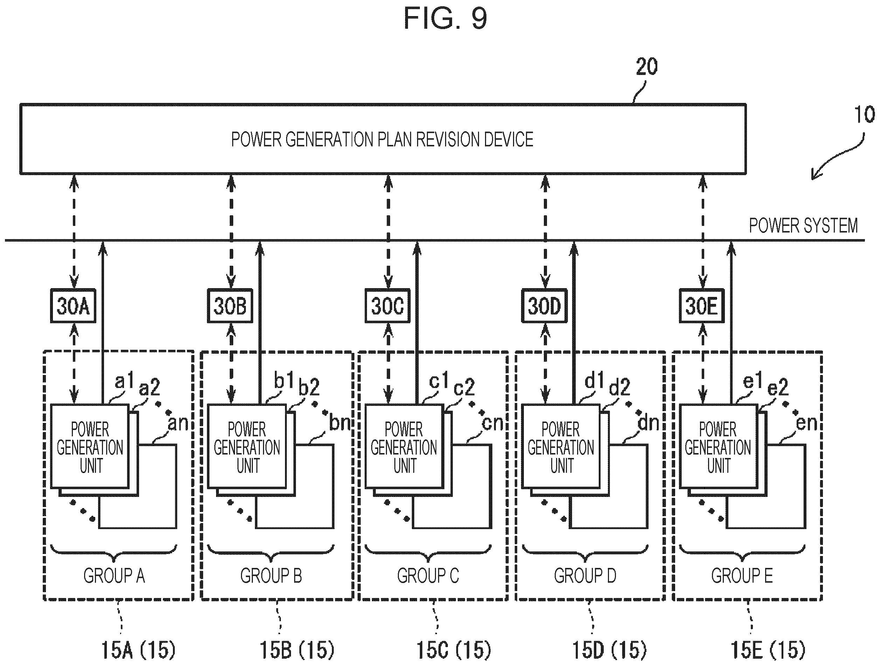

Fig. 9 is a diagram illustrating an example of a power generation system according to a second embodiment.

As illustrated in Fig. 9, the power generation system 10 according to the present embodiment is provided with a fuel cell device 15, a power generation plan revision device 20, and control devices 30A to 30E.

Since the configuration in the power generation plan revision device 20 is similar to the first embodiment, a detailed description is omitted here.

In the example illustrated in Fig. 9, the power generation system 10 is provided with a power generation unit cluster containing a plurality of fuel cell power generation units (hereinafter, power generation units) including fuel cell stacks.

The power generation unit cluster is grouped by pluralities of power generation units. Note that, although omitted from illustration, each of these power generation units includes a fuel cell stack, a power conditioner for converting DC power generated by the fuel cell stack into AC power for output to an electric power system, a control device that controls operations by the above equipment, and the like.

In this example, the power generation unit cluster is grouped into power generation units a1 to an belonging to a group A, power generation units b1 to bn belonging to a group B, power generation units c1 to cn belonging to a group C, power generation units d1 to dn belonging to a group D, and power generation units e1 to en belonging to a group E. All of the power generation units belonging to a single group are also simply called the "power generation units in a group". The fuel cell device according to the present disclosure corresponds to each one of the groups A to E, for example.

However, the configuration of the power generation unit cluster above is an illustrative example, and the configuration is not limited to this example. For example, the power generation unit cluster may also be grouped into a single group of power generation units.

The control devices 30A to 30E are provided in correspondence with the power generation units a1 to an belonging to the group A, the power generation units b1 to bn belonging to the group B, the power generation units c1 to cn belonging to the group C, the power generation units d1 to dn belonging to the group D, and the power generation units e1 to en belonging to the group E, respectively, and control operations by each of the power generation units in a group.

For example, the control device 30A controls the output of each of the power generation units a1 to an belonging to the group A via a communication network to enable efficient operations by (for example, to optimize the service life of) the power generation units a1 to an.

The control devices 30A to 30E may be anything with a control function, and are provided with a computational processor (not illustrated), storage (not illustrated) storing a control program, and a communicator (not illustrated). Prescribed control is performed in the control devices 30A to 30E by having the computational processor read out and execute the control program stored in the storage. One example of the computational processor is a microprocessor. One example of the storage is a memory.

The power generation plan revision device 20 instructs each of the control devices 30A to 30E with various information pertaining to a revised power generation plan and the like via a communication network, in response to an output request by an external user, for example. Each of the control devices 30A to 30E adjusts the number of power generation units that are to generate power from among the plurality of power generation units belonging to each of the fuel cell devices 15A to 15E according to the power generation output in the received power generation plan. That is, a change in the output of the fuel cell device 15 corresponds to a change in the power-generating number of power generation units belonging to the fuel cell device 15. In other words, an output change of the fuel cell device 15 is realized by changing the power-generating number of power generation units.

The operations and effects exhibited by the power generation system 10 according to the present embodiment are similar to the operations and effects described in any of the first embodiment and the first to third implementation examples of the first embodiment, and therefore a description is omitted.

The configuration of the power generation system 10 above is an illustrative example, and the configuration is not limited to this example. For example, the power generation plan revision device 20 may also be equipped with the control function of the control devices 30A to 30E and control operations by each of the power generation units in the groups directly.

The first embodiment, the first to third implementation examples of the first embodiment, the first and second modification examples of the first embodiment, and the second embodiment may be combined with each other insofar as one does not preclude the other. Many refinements and other embodiments of the present disclosure will be apparent from the above description to a person skilled in the art. Consequently, the above description should be interpreted only as an illustrative example, and is provided for the purpose of instructing a person skilled in the art as to the best manner in which to reduce the present disclosure to practice. Details of the structure and/or function of the present disclosure can be changed substantially without departing from the spirit thereof.

### Industrial Applicability

Aspects of the present disclosure can be used in a power generation plan revision method, a power generation plan revision device, and a power generation system that may reduce, more than in the past, planning error in a power generation plan for a fuel cell device.

### Reference Signs List

10 power generation system
15 fuel cell device
15A fuel cell device
15B fuel cell device
15C fuel cell device
15D fuel cell device
15E fuel cell device
20 power generation plan revision device
21 communicator
23 controller
30A control device
30B control device
30C control device
30D control device
30e control device
a1 to an power generation unit
b1 to bn power generation unit
c1 to cn power generation unit
d1 to dn power generation unit
e1 to en power generation unit

## Claims

1. A power generation plan revision method comprising:
receiving a power generation plan for a fuel cell device provided with a plurality of fuel cell power generation units; and
revising the received power generation plan for the fuel cell device so as to advance a timing of changing the power-generating number of the fuel cell power generation units relative to a timing of changing from a previous unit period to a next unit period in the power generation plan, according to the magnitude of a change in the output of the fuel cell device when changing from the previous unit period to the next unit period.

2. The power generation plan revision method according to claim 1, wherein the revising involves revising the power generation plan for the fuel cell device so as to further advance the timing of changing the power-generating number of the fuel cell power generation units relative to the timing of changing from the previous unit period to the next unit period in the power generation plan, proportionally with the magnitude of the change in the output of the fuel cell device when changing from the previous unit period to the next unit period in the power generation plan for the fuel cell device.

3. The power generation plan revision method according to claim 1 or 2, wherein the revising involves determining a magnitude of time by which to advance the timing of changing the power-generating number of the fuel cell power generation units relative to the timing of changing from the previous unit period to the next unit period such that the difference or ratio of the following falls within a prescribed range: a total power generation amount of the power generation plan for the fuel cell device in the previous unit period and the next unit period and a total power generation amount of the fuel cell device in the previous unit period and the next unit period predicted for the case of controlling the fuel cell device on the basis of a revised power generation plan for the fuel cell device.

4. A power generation plan revision device comprising:
a communicator that receives a power generation plan for a fuel cell device provided with a plurality of fuel cell power generation units; and
a controller that revises the received power generation plan for the fuel cell device so as to advance a timing of changing the power-generating number of the fuel cell power generation units relative to a timing of changing from a previous unit period to a next unit period in the power generation plan, according to the magnitude of a change in the output of the fuel cell device when changing from the previous unit period to the next unit period.

5. A power generation system comprising:
a fuel cell device provided with a plurality of fuel cell power generation units; and
the power generation plan revision device according to claim 4.

## Amended claims

### Amended claims under Art. 19.1 PCT

1. A power generation plan revision method comprising:
receiving a power generation plan for a fuel cell device provided with a plurality of fuel cell power generation units; and
revising the received power generation plan for the fuel cell device so as to advance a timing of changing the power-generating number of the fuel cell power generation units relative to a timing of changing from a previous unit period to a next unit period in the power generation plan, according to the magnitude of a change in the output of the fuel cell device when changing from the previous unit period to the next unit period.

2. The power generation plan revision method according to claim 1, wherein the revising involves revising the power generation plan for the fuel cell device so as to further advance the timing of changing the power-generating number of the fuel cell power generation units relative to the timing of changing from the previous unit period to the next unit period in the power generation plan, proportionally with the magnitude of the change in the output of the fuel cell device when changing from the previous unit period to the next unit period in the power generation plan for the fuel cell device.

3. The power generation plan revision method according to claim 1 or 2, wherein the revising involves determining a magnitude of time by which to advance the timing of changing the power-generating number of the fuel cell power generation units relative to the timing of changing from the previous unit period to the next unit period such that the difference or ratio of the following falls within a prescribed range: a total power generation amount of the power generation plan for the fuel cell device in the previous unit period and the next unit period and a total power generation amount of the fuel cell device in the previous unit period and the next unit period predicted for the case of controlling the fuel cell device on the basis of a revised power generation plan for the fuel cell device.

4. A power generation plan revision device comprising:
a communicator that receives a power generation plan for a fuel cell device provided with a plurality of fuel cell power generation units; and
a controller that revises the received power generation plan for the fuel cell device so as to advance a timing of changing the power-generating number of the fuel cell power generation units relative to a timing of changing from a previous unit period to a next unit period in the power generation plan, according to the magnitude of a change in the output of the fuel cell device when changing from the previous unit period to the next unit period.

5. A power generation system comprising:
a fuel cell device provided with a plurality of fuel cell power generation units; and
the power generation plan revision device according to claim 4.

6. The power generation plan revision method according to claim 1, wherein the revising involves:
revising the received power generation plan for the fuel cell device to advance the timing of changing the power-generating number of the fuel cell power generation units relative to the timing of changing from the previous unit period to the next unit period in the power generation plan when the magnitude of the change in the output of the fuel cell device when changing from the previous unit period to the next unit period is equal to or greater than a prescribed value in the received power generation plan for the fuel cell device, and
not revising the received power generation plan for the fuel cell device to advance the timing of changing the power-generating number of the fuel cell power generation units relative to the timing of changing from the previous unit period to the next unit period in the power generation plan when the magnitude of the change in the output of the fuel cell device when changing from the previous unit period to the next unit period is less than the prescribed value in the received power generation plan for the fuel cell device.

7. The power generation plan revision device according to claim 4, wherein the controller:
revises the received power generation plan for the fuel cell device to advance the timing of changing the power-generating number of the fuel cell power generation units relative to the timing of changing from the previous unit period to the next unit period in the power generation plan when the magnitude of the change in the output of the fuel cell device when changing from the previous unit period to the next unit period is equal to or greater than a prescribed value in the received power generation plan for the fuel cell device, and
does not revise the received power generation plan for the fuel cell device to advance the timing of changing the power-generating number of the fuel cell power generation units relative to the timing of changing from the previous unit period to the next unit period in the power generation plan when the magnitude of the change in the output of the fuel cell device when changing from the previous unit period to the next unit period is less than the prescribed value in the received power generation plan for the fuel cell device.
